# EUROPEAN PATENT SPECIFICATION

(11) **EP 2 336 735 B1**
(45) Date of publication and mention of the grant of the patent: **20.05.2015**
(21) Application number: 09817629.0
(22) Date of filing: 09.09.2009
(51) Int. Cl.: G01G 11/12, B65G 43/08

(54) **MEASURING DEVICE**
MESSEINRICHTUNG
DISPOSITIF DE MESURE

(30) Priority: 04.10.2008 JP 2008259128
(43) Date of publication of application: 22.06.2011
(73) Proprietor: Ishida Co., Ltd., Kyoto-shi, Kyoto 606-8392 (JP)
(72) Inventor: SAKAGAMI, Yoshiaki, Ritto-shi Shiga 520-3026 (JP); TAKAHASHI, Atsushi, Ritto-shi Shiga 520-3026 (JP)
(74) Representative: Global IP Europe Patentanwaltskanzlei
(86) International application number: PCT/JP2009/065751
(87) International publication number: WO 2010/038592

(56) References cited:
- EP-A1- 0 514 107
- EP-A1- 1 400 790
- JP-A- 2 206 726
- JP-A- 2008 296 175
- JP-B2- 2 640 880
- JP-B2- 3 017 289
- JP-B2- 6 041 874
- JP-B2- 8 027 209
- US-A- 5 990 422

## Description

### TECHNICAL FIELD

The present invention relates to a weighing apparatus.

### BACKGROUND ART

In a weighing apparatus, as disclosed, for example, in Patent Document 1 (Japanese Laid-open Patent Publication No. 61-14047), items are intermittently supplied from an upstream device to a weighing conveyor. Here, when a plurality of items is put at a time on the weighing conveyor, accurate weighing cannot be performed (so-called double count errors). Therefore, the conveyor speed for the weighing conveyor is set in accordance with a distance interval between the supplied items (item interval).

US 5 990 422 A discloses a weighing apparatus comprising conveying means configured to convey an item, and weighing means configured to measure a weight of the item conveyed on the conveying means.

### SUMMARY OF THE INVENTION

### < Technical Problem >

The conveyor speed for the weighing conveyor is sometimes set too high in order to avoid double count errors. When the conveyor speed is high, the processing performance of the weighing device (i.e., the number of items that can be processed per unit of time) is improved. On the other hand, the time each item is placed on the weighing conveyor is shortened. Accordingly, the available time for weighing is also shortened so that the weighing accuracy deteriorates.

The present invention is contrived to solve these matters. More specifically, an object of the present invention is to obtain a weighing device able to avoid a loss in measurement precision caused by the conveyor speed being set too high.

### < Solution to Problem >

The weighing apparatus of the present invention includes conveying means, weighing means, detecting means, first storing means, and presenting means. The conveying means transports the items. The weighing means measures the weight of the items conveyed on the conveying means. The detecting means detects the item interval. The item interval relates to a distance between a plurality of items supplied by the conveying means. The first storing means stores a plurality of item intervals. The plurality of item intervals is acquired by the detecting means during a predetermined period of time in the past. The presenting means provides, based on a plurality of item intervals, guidance related to changing the item conveying speed that has been set in the conveying means.

According to the present aspect, the presenting means provides guidance related to changing the item conveying speed based on a plurality of item intervals. The user can thus determine whether or not to change the setting for the item conveying speed based on the guidance provided by the presenting means.

Furthermore, the presenting means preferably provides guidance including information related to a weighing accuracy of the item. The user can thus change the setting for the item conveying speed with knowledge of the weighing accuracy after changing the item conveying speed.

Furthermore, the presenting means preferably provides the guidance including a first element and a second element. The first element is information related to the weighing accuracy of the item. The second element is information different from the first element. The second element includes processing capacity and actual capacity. The processing capacity is the number of items that can be processed per unit of time. The actual capacity is the number of good items that can be processed per unit of time. In this way, the user can determine whether or not to change the item conveying speed while referencing a plurality of elements. . Preferably, there are further provided an accuracy information storage area and determining means. The accuracy information storage area is used to store information related to the weighing accuracy of the item. The information related to the weighing accuracy of the item is determined using a plurality of different filters. Also, the determining means determines the item weighing accuracy based on information related to the weighing accuracy of the item stored in the accuracy information storage area. Also, the presenting means provides guidance. This guidance includes information related to the weighing accuracy of the item determined by the determining means. Because the determining means determines the weighing accuracy of the item based on the information related to the weighing accuracy stored beforehand, the processing load can be reduced.

The determining means also preferably determines the weighing accuracy of the item in accordance with the item conveying speed, based on information related to the weighing accuracy of the item stored in the accuracy information storage area. According to the present aspect, because the weighing accuracy of the item is determined in accordance with the item conveying speed, the correlation between item conveying speed and the weighing accuracy can be understood.

Preferably, the determining means determines whether or not the item conveying speed can be changed based on a plurality of item intervals; and the presenting means provides guidance when the determining means has determined that the item conveying speed can be changed. Results determined according to the current item interval can thereby be understood.

Preferably, data processing means and second storing means are further provided. The data processing means executes filter processing on the weight data. The weight data is acquired by the weighing means. The second storing means stores a plurality of weight data sets related to a plurality of items. The plurality of weight data sets related to the plurality of items is acquired by the weighing means during a predetermined time period in the past. Preferably, the data processing means executes the filter processing on the plurality of weight data sets using the second filter, and the determining means determines, based on the results of the filter processing using the second filter, whether or not the item conveying speed can be changed. The second filter differs from the first filter currently set. According to the present aspect, the data processing means executes filter processing on the plurality of weight data sets stored in the second storing means using the second filter different from the currently set first filter. Then, the determining means determines, based on the results of the filter processing using the second filter, whether or not the item conveying speed can be changed. Therefore, when the filter is changed based on the change in the item conveying speed and when the weighing accuracy has changed based on a change in filter, the determining means is able to determine whether or not the item conveying speed can be changed, while taking into account the impact of a change in the item conveying speed on weighing accuracy.

Preferably, the determining means calculates an item defect rate based on the results of filter processing using the second filter; and determines, based on this defect rate, whether or not the item conveying speed can be changed. According to the present aspect, the determining means calculates the item defect rate based on the results of filter processing using the second filter. Also, the determining means determines, based on this defect rate, whether or not the item conveying speed can be changed. Therefore, when the filter is changed based on the change in the item conveying speed, when the weighing accuracy has changed based on a change in filter, and when the defect rate has changed based on the change in the weighing accuracy, the determining means is able to determine whether or not the item conveying speed can be changed, taking into account the impact of a change in the item conveying speed on the defect rate.

Preferably, the determining means is capable of setting a low value for the item conveying speed for a proposed change. This low value is a value lower than the item conveying speed corresponding to the lowest value among a plurality of item intervals. According to the present aspect, the determining means can set the item conveying speed for a proposed change to a value lower than the item conveying speed corresponding to the lowest value among a plurality of item intervals. Setting a lower value to the item conveying speed makes the time available for weighing an item longer. Thus, the weighing accuracy can be further improved. There is a possibility that double count errors will occur when the item conveying speed is changed to a value lower than the item conveying speed corresponding to the lowest value among a plurality of item intervals. Therefore, this constitutes effective means especially when giving a priority to improving the weighing accuracy over avoiding double count errors. The overall defect rate can be reduced if the number of mistakes decreased due to the improved weighing accuracy is greater than the number of mistakes increased due to double count errors.

Preferably, changing means is further provided. The changing means changes the currently set item conveying speed to the item conveying speed obtained by the determining means. Because the item conveying speed can be changed automatically to the appropriate value by the changing means, weighing can always be performed at the appropriate item conveying speed.

### < Advantageous Effects of Invention>

The present invention is able to avoid a decrease in weighing accuracy caused by the conveyor speed being set too high.

### BRIEF DESCRIPTION OF THE DRAWINGS

FIG. 1 schematically represents the configuration of the weighing apparatus according to a first embodiment of the present invention.
FIG. 2 is a block diagram representing a portion of the configuration for the control unit according to a first embodiment of the present invention.
FIG. 3 is a block diagram representing a portion of the configuration for the control unit according to a first embodiment of the present invention.
FIG. 4 represents weight data acquired from measurements related to a single item.
FIG. 5 is a histogram representing the distribution of the weight values related to a plurality of items.
FIG. 6 is a histogram representing the distribution of the weight values related to a plurality of items.
FIG. 7 is a block diagram representing a portion of the configuration for the control unit according to a variation on the first embodiment of the present invention.
FIG. 8 schematically represents the configuration of the weighing apparatus according to a second embodiment of the present invention.
FIG. 9 is a block diagram representing a portion of the configuration for the control unit according to a second embodiment of the present invention.
FIG. 10 represents an example of the results obtained from filter processing.
FIG. 11A represents the determination results obtained from the second determination process.
FIG. 11B represents the determination results obtained from the third determination process.
FIG. 12 represents the determination results obtained from the fourth détermination process.
FIG. 13 represents the determination results obtained from the fifth determination process.
FIG. 14 represents the processing flow showing the first through fifth determination processing and the display of the processing results.
FIG. 15 is a view representing guidance presented on a display unit.
FIG. 16 is a view represents guidance presented on a display unit.
FIG. 17 is a block diagram represents a portion of the configuration for the control unit according to a variation on the second embodiment of the present invention.

### DESCRIPTION OF EMBODIMENTS

### < 1st Embodiment >

The following is a detailed description of a first embodiment of the present invention with reference to the drawings. The elements denoted by the same reference symbols in the different drawings are identical or corresponding elements.

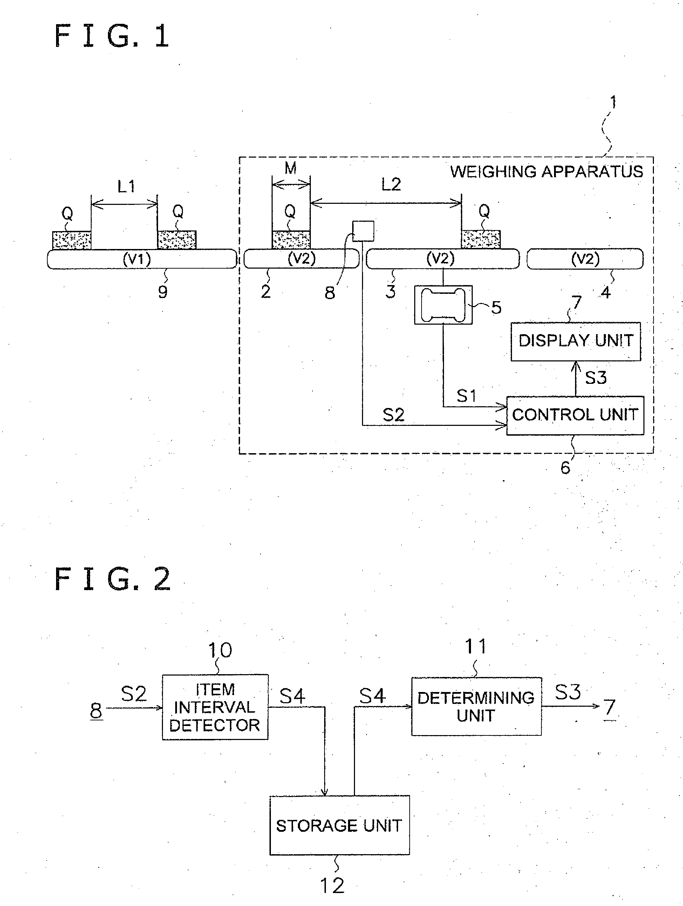

FIG. 1 is a view schematically showing the configuration of the weighing apparatus 1 according to an embodiment of the present invention. The weighing apparatus 1 includes a take-in conveyor 2, a weighing conveyor 3, a sorting conveyor 4, a weighing unit 5, a control unit 6, a display unit 7, and photosensor 8. The weighing unit 5 is a load cell and the like. The weighing unit 5 measures the weight of the items Q conveyed on the weighing conveyor 3. The control unit 6 is a computer and the like. The display unit 7 is a liquid crystal display device with an integrated touch screen and the like. The photosensor 8 is configured to detect the items Q passed from the take-in conveyor 2 to the weighing conveyor 3. A transport conveyor 9, which is an upstream device, is disposed upstream from the take-in conveyor 2.

A plurality of items Q is supplied intermittently from the transport conveyor 9 to the take-in conveyor 2. Similarly, a plurality of items Q is supplied intermittently from the take-in conveyor 2 to the weighing conveyor 3, and a plurality of items Q is supplied intermittently from the weighing conveyor 3 to the sorting conveyor 4. The item conveying speed (conveyor speed) V2 for the take-in conveyor 2, the weighing conveyor 3, and the sorting conveyor 4 is higher than the item conveying speed V1 for the transport conveyor 9. Therefore, the distance between a plurality of items Q (the item interval L2) being conveyed on the take-in conveyor 2, the weighing conveyor 3, or the sorting conveyor 4 is greater than the item interval L1 between a plurality of items Q being conveyed on the transport conveyor 9.

FIG. 2 is a block diagram showing a portion of the configuration for the control unit 6. The control unit 6 has an item interval detecting unit 10, a determining unit 11, and a storage unit 12. The storage unit 12 includes a hard disk, a semiconductor memory, or the like.

Item detection signals S2 are inputted from a photosensor 8 to the item interval detecting unit 10. The item interval detecting unit 10 detects the item interval L2 between a plurality of items Q supplied on the weighing conveyor 3 based on the item detection signals S2. Due to some extent of variation in the item interval L2, the item interval detecting unit 10 executes detection processing on the item interval L2 every time an item detection signal S2 is inputted from the photosensor 8. Information related to item intervals L2 detected by the article interval detecting unit 10 is stored as data S4 in the storage unit 12. The storage unit 12 is configured to store a plurality of data sets S4 related to a plurality of item intervals L2. The plurality of data sets S4 is obtained by the item interval detecting unit 10 over a predetermined period of time.

The determining unit 11 executes a process for determining whether or not the currently set item conveying speed V2 can be changed based on the plurality of data sets S4 retrieved from the storage unit 12. As mentioned above, the item conveying speed V2 is sometimes set too high in order to avoid double-count errors. When the item conveying speed V2 is high, the processing capacity of the measuring device 1 (i.e., the number of items that can be processed per unit of time) is improved, while the time items Q remain on the weighing conveyor 3 is reduced. When the time items Q remain on the weighing conveyor 3 is reduced, the time in which weighing can be performed is also reduced. As a result, weighing accuracy declines.

The processing capacity of the weighing apparatus 1 is proportional to the item conveying speed V2, and inversely proportional to the sum of the item interval L2 and the item length M. Therefore, for example, when the average value of the item intervals L2 stored in the storage unit 12 is greater than the average value of the item interval L2 as originally intended and the desired processing capacity can be ensured even with a lower value for a setting of the item conveying speed V2, the determining unit 11 determines that the item conveying speed V2 can be changed to a value lower than the currently set value.

Also, for example, when the minimum value for the item intervals L2 stored in the storage unit 12 is greater than the minimum value for the item interval L2 as originally intended and a double-count error does not occur even with a lower value for a setting of the item conveying speed V2 than the currently set value, the determining unit 11 determines that the item conveying speed V2 can be set to a value lower than the currently set value.

However, when a priority is given for improving the weighing accuracy over avoiding double-count errors, the determining unit 11 can change the item conveying speed V2 to a value lower than the item conveying speed corresponding to the minimum value for the item interval L2 stored in the storage unit 12. By setting the item conveying speed V2 to a lower value, the time in which weighing can be performed is increased. As a result, weighing accuracy can be further improved. If the number of mistakes decreased due to the improved weighing accuracy is greater than the number of mistakes increased due to double count errors, the overall defect rate can be reduced.

When the determining unit 11 has determined that the item conveying speed V2 can be changed, data S3 is sent to the display unit 7 (notifying means) for displaying on the display unit 7 a confirmation message such as predetermined text or images asking the user whether the item conveying speed V2 is to be changed.

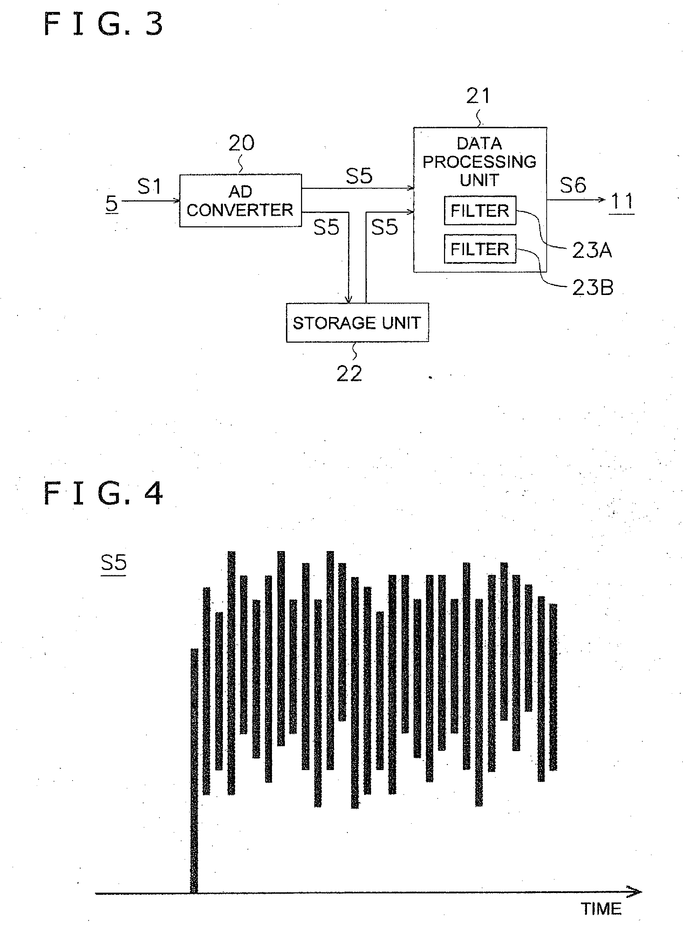

FIG. 3 is a block diagram showing a portion of the configuration for the control unit 6. The control unit 6 has an AD converter 20, a data processing unit 21, and a storage unit 22. The storage unit 22 includes a hard disk or semiconductor memory. Weighing signals S1 are inputted from the weighing unit 5 to the AD converter 20. The AD converter 20 converts the weighing signals S1, which are analog signals, into the weight data S5, which is digital data and outputs the weight data S5. The weight data S5 is inputted to the data processing unit 21 and the storage unit 22.

FIG. 4 is a view showing weight data S5 acquired from measurements related to a single item Q. As shown in FIG. 4, the weight data S5 is provided as digital values having various frequency components.

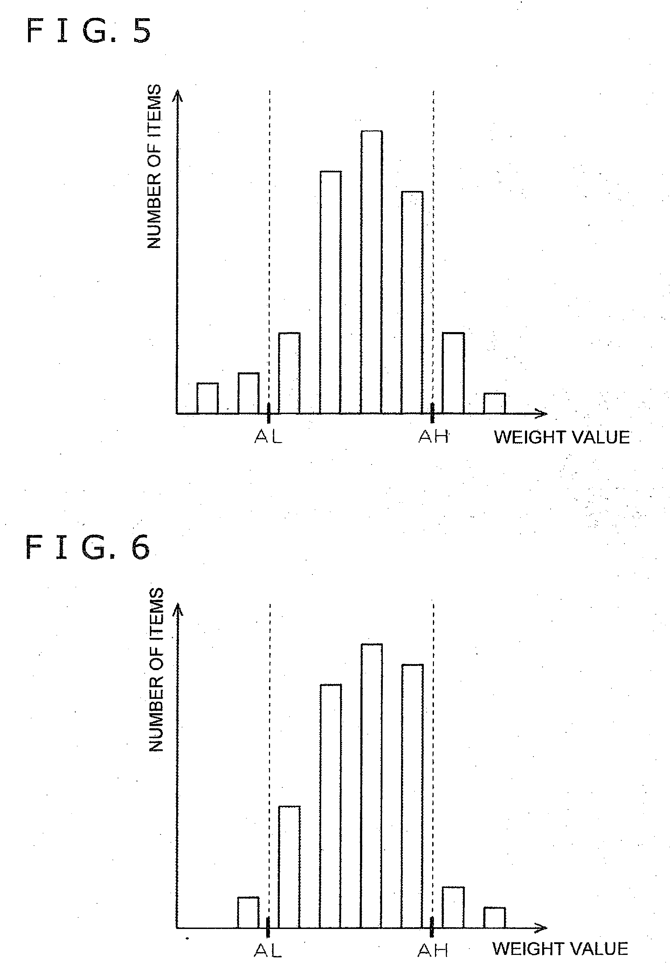

The data processing unit 21 executes filter processing using low-pass filter 23A on the weight data S5 inputted from the AD converter 20. Then, the control unit 6 determines whether the weight value for the item Q is within an acceptable range, based on the weight data S5 after filter processing. More specifically, an allowable lower limit value AL and an allowable upper limit AH (see FIGS. 5 and 6) related to the weight value of items Q are set beforehand. The control unit 6 makes a pass/fail determination for an item Q by comparing the weight value for the item Q indicated in the weight data S5 to the allowable lower limit value AL and the allowable upper limit value AH.

Also, the control unit 22 stores a plurality of weight data sets S5 related to a plurality of items Q inputted from the AD converter 20 in the most recent time period which is predetermined.

When the determining unit 11 determines whether or not the item conveying speed V2 can be changed, the data processing unit 21 executes the following process. Specifically, the data processing unit 21 retrieves a plurality of weight data sets S5 stored in the storage unit 22, and then executes filter processing on the weight data sets S5 using the low-pass filter 23B corresponding to the item conveyor speed V2 in the proposed change. The weight data S6 after filter processing using the low-pass filter 23B is inputted to the determining unit 11.

Generally, a low-pass filter with a high cut-off frequency has a quick response speed, but is less stable because of large overshoot. On the other hand, a low-pass filter with a low cut-off frequency has a slow response speed, but is more stable because of small overshoot. Therefore, when a long period for measurement can be ensured by lowering the item conveying speed V2, weighing accuracy can be improved by using a low-pass filter with a low cut-off frequency. By changing the setting for the filter coefficient in a digital filter, low-pass filters with various properties can be realized.

The determining unit 11 determines whether or not the weight value for an item Q is included within the allowable range based on weight data S6 inputted from the data processing unit 21. More specifically, a pass/fail determination for an item Q is made by comparing the weight value of the item Q expressed by the weight data S6 to the allowable lower limit value AL and the allowable upper limit value AH.

FIG. 5 is a histogram showing the distribution of the weight values related to a plurality of items Q when the filter processing is executed using low-pass filter 23A. FIG. 6 is a histogram showing the distribution of the weight values related to a plurality of items Q when the filter processing is executed using low-pass filter 23B. It is clear from the examples shown in FIGS. 5 and 6 that, due to improved measurement accuracy, the defect rate (proportion of the number of defective items in the total number of items) is lower when a low-pass filter 23B with a low cut-off frequency is used (FIG. 6) than when a low-pass filter 23A with a high cut-off frequency is used (FIG. 5). However, contrary to the above, there are also some situations in which the defect rate increases due to improved measurement accuracy.

The determining unit 11 calculates the defect rate when the low-pass filter 23B is used, and compares the defect rate to the defect rate when the low-pass filter 23A is used (i.e., the current defect rate). When the defect rate is reduced to less than the current value by changing the item conveying speed V2, it is determined that the item conveying speed V2 can be changed to a value lower than the value of the current setting.

### (Characteristics)

In the weighing apparatus 1 according to this embodiment, the determining unit 11 determines whether or not the item conveying speed V2 can be changed based on the plurality of item intervals L2 stored in the storage unit 12. When the determining unit has determined that the speed can be changed, the display unit 7 displays a confirmation message related to whether or not the item conveying speed V2 should be changed. Therefore, when the item conveying speed V2 is set too high, the user is notified of the situation by a confirmation message displayed on the display unit 7. In this way, a decision can be made whether or not to change the setting for the item conveying speed V2.

In the weighing apparatus 1 according to this embodiment, the data processing unit 21 executes filter processing on the plurality of weight data sets S5 stored in the storage unit 22 using a low-pass filter 23B different from the currently set low-pass filter 23A. Then, the determining unit 11 determines whether or not the item conveying speed V2 can be changed based on the results of the filter processing using the low-pass filter 23B (weight data S6). Therefore, even though the filter is changed along with the change in the item conveying speed V2 and the weighing accuracy is changed along with the change in the filter, the determining unit 11 can determine whether or not the item conveying speed V2 can be changed while taking into account the effect of the change in the item conveying speed V2 on the weighing accuracy.

Also, in the weighing apparatus 1 according to this embodiment, the determining unit 11 calculates the defect rate for the items based on the results of the filter processing using the low-pass filter 23B, and determines whether or not the item conveying speed V2 can be changed based on this defect rate. Therefore, when the filter is changed along with the change in the item conveying speed V2, when the weighing accuracy is changed along with the change in the filter, and when the defect rate is changed along with the change in the weighing accuracy, the determining unit 11 can determine whether or not the item conveying speed V2 is to be changed while taking into account the effect of the change in the item conveying speed V2 on the defect rate.

In the explanation provided above, it has been discussed about an example of which changing the item conveying speed V2 to a value lower than the current setting. However, it can also be changed to a value higher than the current setting. For example, when the desired detect rate can be sufficiently ensured, the processing capacity can be improved by changing the item conveying speed V2 to a value higher than the current setting.

### < Variation >

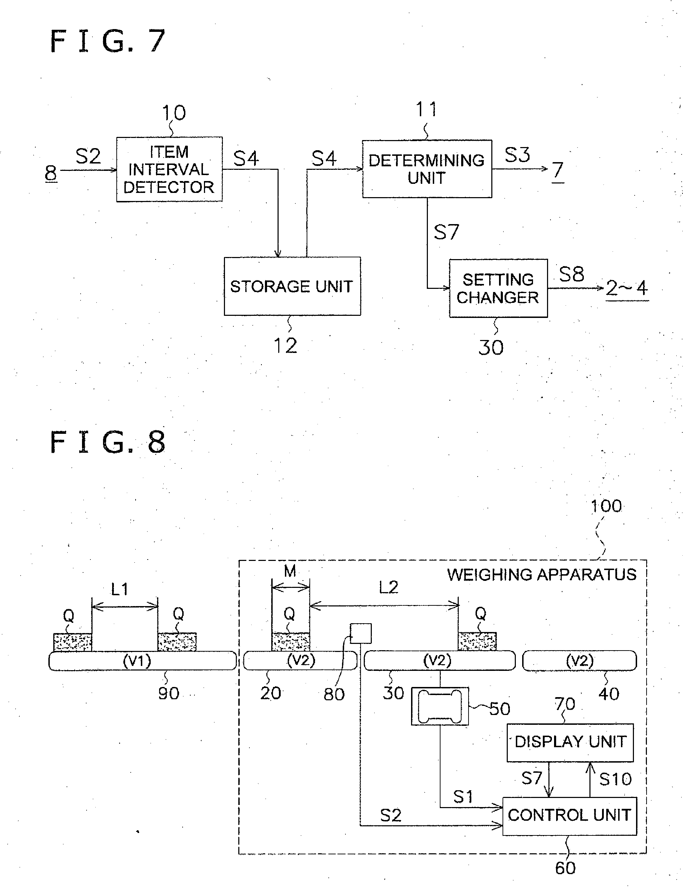

FIG. 7 is a block diagram showing a portion of the configuration in a variation on the control unit 6 corresponding to FIG. 2. In this variation, a setting changer 30 is added to the configuration shown in FIG. 2. The information related to the item conveying speed V2 in a proposed change obtained from the determining unit 11 is inputted to the setting changer 30 as data S7. The setting changer 30 then changes the item conveying speed V2 for the various conveyors from the current setting to the setting for the proposed change provided in the data S7 by sending control signals S8 to the take-in conveyor 2, the weighing conveyor 3, and the sorting conveyor 4. Here, the display of a confirmation message on the display unit 7 can be omitted.

The weighing apparatus 1 in this variation can always perform measurements at the proper item conveying speed V2 because the item conveying speed V2 is automatically changed to the proper value by the setting changer 30.

### < 2nd Embodiment >

The following is a detailed description of a second embodiment of the present invention with reference to the drawings. The elements denoted by the same reference symbols in the different drawings are identical or corresponding elements.

### (Overall Configuration)

FIG. 8 is a view schematically showing the configuration of the weighing apparatus 100 in an embodiment of the present invention. The weighing apparatus 100 includes a take-in conveyor 20, a weighing conveyor 30, a sorting conveyor 40, a weighing unit 50, a control unit 60, a display unit 70, and photosensor 80.

The take-in conveyor 20 is disposed downstream from a transport conveyor 90 which is an upstream device. A weighing conveyor 30 and a sorting conveyor 40 are disposed downstream from a take-in conveyor 20. A plurality of items Q is supplied intermittently from the transport conveyor 90 to the take-in conveyor 20. Similarly, a plurality of items Q is supplied intermittently from the take-in conveyor 20 to the weighing conveyor 30, and a plurality of items Q is supplied intermittently from the weighing conveyor 30 to the sorting conveyor 40. The item conveying speed (conveyor speed) V2 for the take-in conveyor 20, the weighing conveyor 30, and the sorting conveyor 40 is higher than the item conveying speed V1 for the transport conveyor 90. In other words, the take-in conveyor 20, the weighing conveyor 30, and the sorting conveyor 40 operate faster than the transport conveyor 90. Therefore, the distance between a plurality of items Q (the item interval L2) being conveyed on the take-in conveyor 20, the weighing conveyor 30, or the sorting conveyor 40 is greater than the item interval L1 between a plurality of items Q being conveyed on the transport conveyor 90.

The weighing unit 50 is a load cell. The weighing unit 50 measures the weight of the items Q conveyed on the weighing conveyor 30. When the weight of an item Q is weighed by the weighing unit 50, weight signals (data S1), which are analog signals, are inputted to the control unit 60.

The display unit 70 is a liquid crystal display device with an integrated touch screen. The display unit (presenting means) 70 provides information such as the weight of an item Q, whether or not the weight of the item Q is correct, and the determination results (data S10) determined by the determining unit 111 as described below. The determination results include information related to whether or not the item conveying speed V2 can be changed by the user (information on whether or not the conveying speed can be changed). The user can input control commands and various settings using the display unit 70.

The photosensor 80 detects items Q passing from the take-in conveyor 20 to the weighing conveyor 30.

The control unit 60 is a computer. Data S1 related to the weight of an item Q measured by the weighing unit 50 is inputted to the control unit 60. Data S7 sent from the display unit 70 is also inputted to the control unit 60. In addition, data S2 sent from the photosensor 80 is inputted to the control unit 60.

### (Configuration of Control Unit)

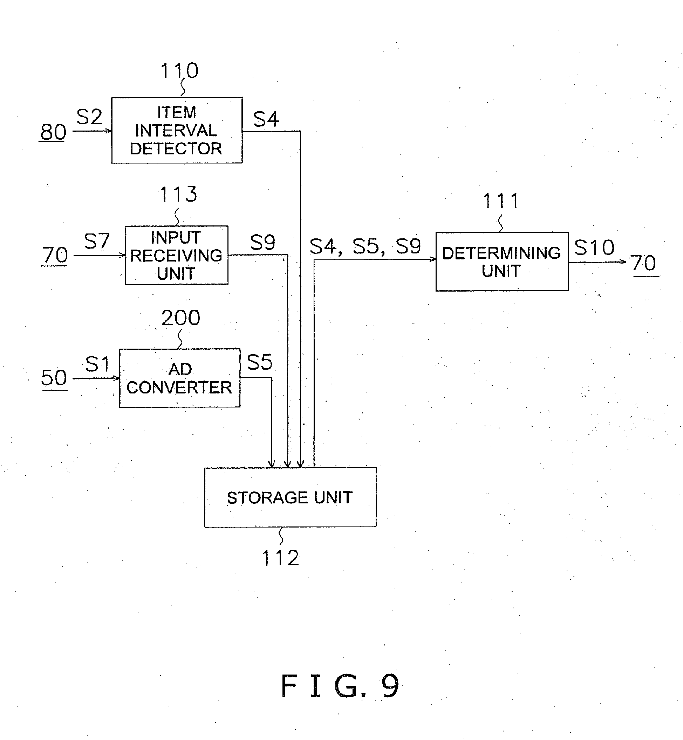

FIG. 9 is a block diagram showing a portion of the configuration for the control unit 60. The control unit 60 has a storage unit 112, an item interval detecting unit 110, an input receiving unit 113, an AD converter 200, and a determining unit 111.

The storage unit 112 can be a hard disk, a semiconductor memory, or the like. The storage unit 112 stores data obtained from the item interval detecting unit 110 and the determining unit 111 described below.

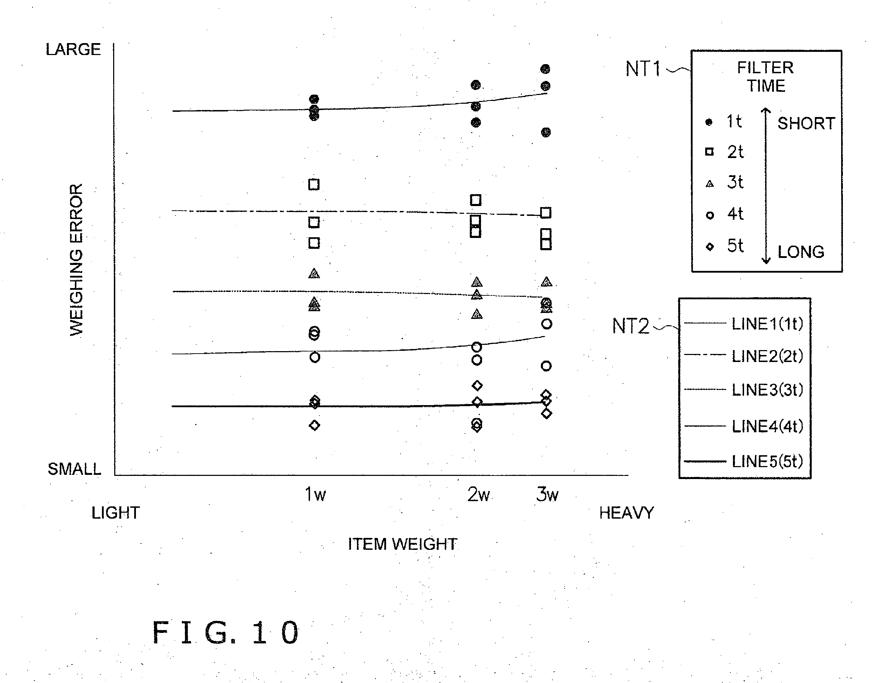

The storage unit 112 further stores function expressions used in the determination process performed by the determining unit 111. These function expressions are formulas used to determine the weighing accuracy. The function expressions are obtained from a plurality of filter processes performed beforehand. FIG. 10 is a view showing an example of the plurality of filter processes. In the filter processing, a plurality of low-pass filters with different cut-off frequencies are used. The filter times required by the various low-pass filters for performing the filter processing vary. In the filter processing shown in FIG. 10, low-pass filters requiring filter times 1t-5t are used (see reference symbol NT1). Also, FIG. 10 shows the results when filter processing has been performed on items with weights 1w-3w. The various plots on the graph are the average values for the measurement errors obtained from performing filter processing 100 times. Curves 1-5 are approximated curves obtained from each type of low-pass filter. More specifically, nine plots obtained from the filter processing performed with each low-pass filter are used in the curve approximation. A function expression (1st equation) for weighing errors using weight values as a parameter is obtained for each of the low-pass filters. Also, by integrating the function expression (1st equation) for each of the low-pass filters using filter times as a parameter, a function expression (2nd equation) is obtained for weighing errors using weight values and filter times as parameters. The weighing accuracy is determined by the extent of the measurement errors between the weights of items Q obtained by weighing and the weights of items Q inputted beforehand. When the measurement errors between the weights of items Q obtained by weighing and the weights of items Q inputted beforehand are smaller, the weighing accuracy is higher. When the measurement errors are larger, the weighing accuracy is lower. Instead of function expressions, a data table can be stored beforehand indicating the correspondence or relationship between a plurality of filter times related to a plurality of item weights, and the measurement errors for each filter time.

Item detection signals S2 from the photosensor 80 are inputted to the item interval detecting unit 110. The item interval detecting unit 110 detects, on the basis of the item detection signals S2, the item interval L2 between a plurality of items Q supplied to the weighing conveyor 3. The information related to the item interval L2 detected by the item interval detecting unit 110 is stored in the storage unit 112 as data S4.

The input receiving unit 113 receives control commands and various types of settings inputted by the user using the display unit 70. Here, the various types of settings include data S7 related to the weight of items Q, data S7 related to the conveying speed of items Q (item conveying speed), and data S7 related to the double-counting interval for items Q. The data S7 related to the weight of items Q is data related to the weight of items Q traveling on the transport conveyor 9. The item conveying speed is a value inputted before the weight of items Q is measured. The item conveying speed varies depending on the type of item Q. Also, the data S7 related to the double-count interval for items Q is a value inputted before the weight of items Q is measured. The double-count interval for items Q also varies depending on the type of item Q. When the input receiving unit 113 receives data S7 related to the weight of items Q and data S7 related to the item conveying speed inputted beforehand by the user, the received data S7 is stored in the storage unit 112 as data S9.

The AD converter 200 converts the weight signals S1 inputted by the weighing unit 50 into weight data S5, which is digital data. The AD converter 200 stores weight data S5 in the storage unit 112.

The determining unit 111 performs filter processing on the data S5 related to the weight of the items Q using predetermined low-pass filters. The predetermined low-pass filter corresponds to the item conveying speed V2 set by the user. The weight of items Q is identified in this way.

Also, the determining unit 111 performs determination processes related to the item conveying speed V2. More specifically, the determining unit 111 performs a first determination process through a fifth determination process based on the various types of data S4, S5, S9 stored in the storage unit 112.

### (1st Determination Process)

In the first determination process, the determining unit 111 calculates the average value for the item intervals L2 and the 3σ variation in the average value based on the plurality of data sets S4 related to the item intervals L2 stored in the storage unit 112. Here, σ is the standard deviation.

### (2nd Determination Process)

In the second determination process, the determining unit 111 determines whether or not there is a conveying speed in a proposed change (proposed speed). More specifically, it is determined whether the current conveying speed V2 can be changed to a lower value or a higher value.

In the process used to determine whether the current conveying speed V2 can be changed to a lower value, the average value and the 3σ variation in the average value for the item intervals L2 at the current conveying speed V2 are compared to the data S9 related to the double-count interval stored in the storage unit 112. The current conveying speed V2 is a speed currently set for the transport conveyor. The determining unit 111 sets a provisional conveying speed, and determines the item interval that can be ensured at the provisional conveying speed (more specifically, the item interval and its variation). The provisional conveying speed is a speed in which the value of the current conveying speed V2 has been changed. The item interval at the provisional conveying speed is determined based on the average value of the item intervals L2 at the current conveying speed V2 and the 3σ variation in the average value. In addition, the item interval at the provisional conveying speed may be determined based on actual measurement values stored beforehand in the storage unit 112. When the item interval at the provisional conveying speed is greater than the double-count interval for the items, the determining unit 111 determines that the current conveying speed V2 can be changed. Also, when the determining unit 111 determines that the current conveying speed V2 can be changed to the provisional conveying speed, the provisional conveying speed becomes a proposed speed. When the conveying speed V1 for the transport conveyor 90, which is an upstream device, is constant, the item interval becomes lower as the proposed speeds V20-V23 become lower.

Also, the process used to determine whether the current conveying speed V2 can be changed to a higher value is performed by comparing the current conveying speed to the maximum conveying speed for the weighing apparatus 100. When the current conveying speed V2 is not the maximum conveying speed, the determining unit 111 determines that the current conveying speed V2 can be changed to a higher value.

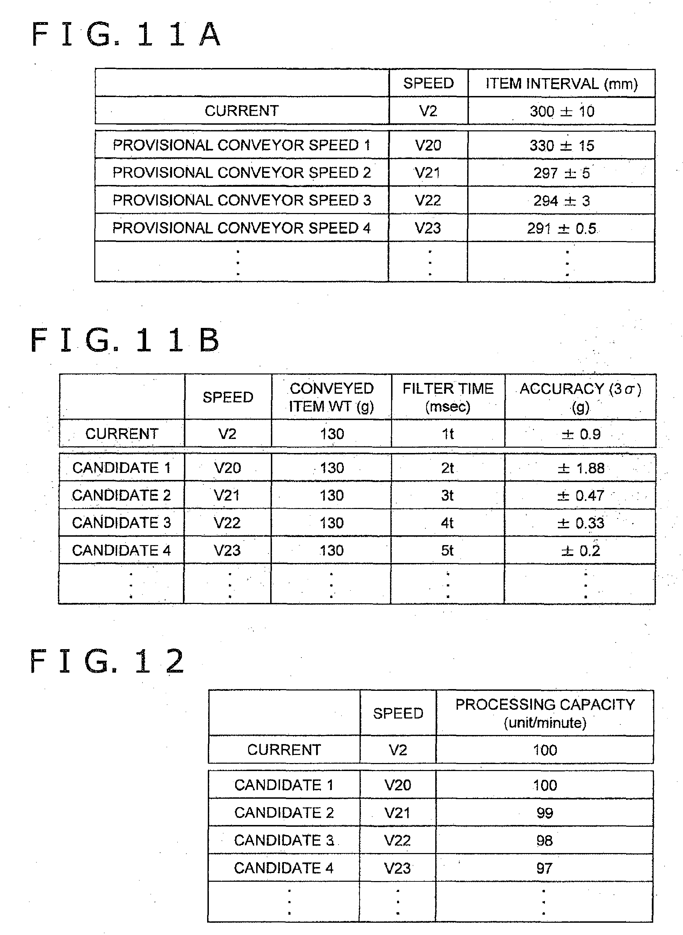

In this way, the determining unit 111 identifies a proposed speed and a product interval corresponding to the proposed speed (see FIG. 11A). The identified values are stored in the storage unit 112.

### (3rd Determination Process)

The third determination process is performed when it is determined in the second determination process that the current conveying speed V2 can be changed. In the third determination process, the determining unit 111 determines the accuracy of the filter processing related to the weight of the items Q targeted for measurement based on the basic data function expression (2nd Equation) described above (see FIG. 11B). More specifically, the accuracy of the current conveying speed V2 and the accuracy of the proposed speeds V20-V23 are determined respectively. In the filter processing, low-pass filters having filter times corresponding to proposed speeds V20-V23 are used. FIG. 11B shows the accuracy of the filter processing related to items Q when the weight of the items Q targeted for weighing is 130 g. The values obtained in the third determination process are stored in the storage unit 112.

### (4th Determination Process)

In the fourth determination process, the determining unit 111 determines the processing capacity (units per minute) at the current conveying speed V2 and the processing capacities (units per minute) at the proposed speeds V20-V23 (see FIG. 12). Processing capacity means the number of items that can be processed per unit of time (one minute in this embodiment). The processing capacity is determined based on the conveying speed and the length of the weighing conveyor 30. More specifically, it is determined by dividing the conveying speed (V2, V20-V23) by the length of the weighing conveyor 30. The values obtained in the fourth determination process are stored in the storage unit 112.

### (5th Determination Process)

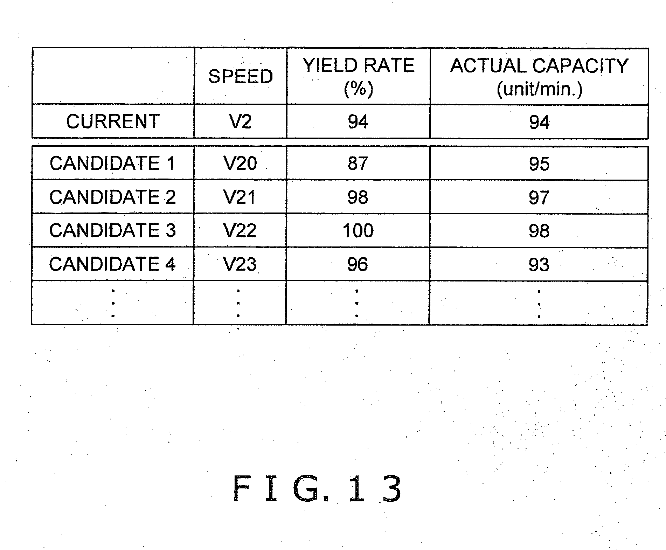

In the fifth determination process, the determining unit 111 determines the yield rate and the actual capacity of the current conveying speed V2 and the proposed speeds V20-V23 based on the accuracy obtained in the third determination process and the processing capacity obtained in the fourth determination process (see FIG. 13). The yield rate is the percentage of items accurately weighed among all of the items weighed by the weighing unit 50. The actual capacity is the number of passing items (items Q that are not failed) that can be weighed in one minute based on the yield rate. The yield rate can also be determined based on actual measurements. An equation for determining the correlation between the conveying speed and the yield rate can be stored beforehand, and the yield rate at a proposed speed can also be determined based on this equation. The values obtained in the fifth determination process are stored in the storage unit 112.

### (Processing Flow)

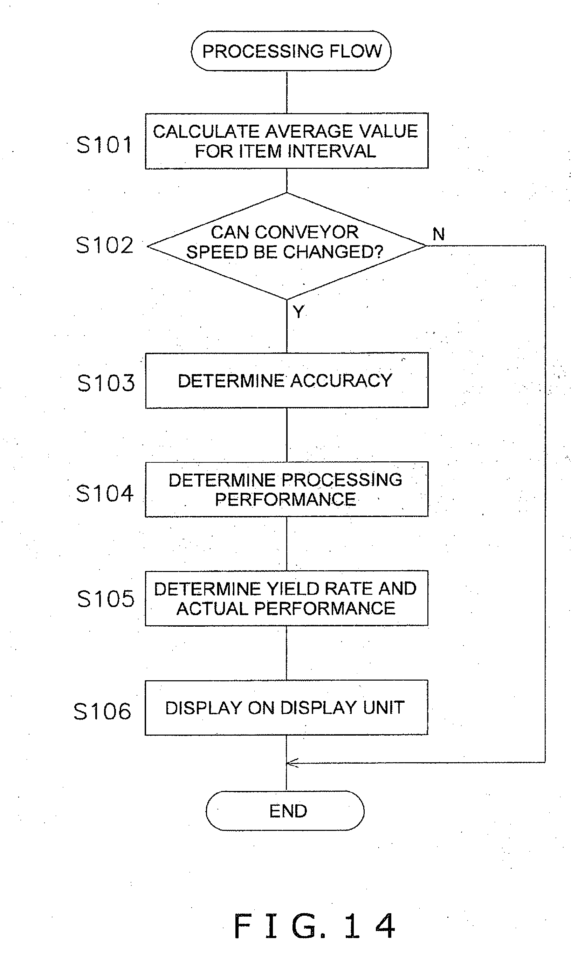

The following is a detailed explanation, with reference to FIG. 14, of the first through fifth determination processes performed by the determining unit 111 and of notification of information after the first through fifth determination processes.

In Step S101, the determining unit 111 calculates the average value of the item intervals L2 (more specifically, the average value and the 3σ variation in the average value) (1st Determination Process). More specifically, the average value is calculated based on a plurality of data sets S4 related to item intervals L2 stored in the storage unit 112. The process then moves to Step S102.

In Step S102, the determining unit 111 determines whether or not the current conveying speed V2 can be changed (2nd Determination Process). More specifically, it compares the item interval at the provisional conveying speed to the double-count interval, and determines that the current conveying speed V2 can be changed to a lower value when the item interval at the provisional conveying speed is greater than the double-count interval. It also compares the maximum conveying speed to the current conveying speed V2 to determine whether the current conveying speed V2 can be changed to a higher value. In Step S102, the process moves to Step S103 when it is determined that the current conveying speed V2 can be changed. The process ends when it is determined that the speed cannot be changed.

In Step S103, the determining unit 111 determines the accuracy (3σ) of the filter processing on the weight of the items Q based on the function expression (2nd equation) and the data S9 related to the weight of the item Q (3rd Determination Process). In Step S103, the process moves to Step S104 when the accuracy has been determined.

In Step S104, the determining unit 111 determines the processing capacity (units per minute) of the current conveying speed V2 and the processing capacity (units per minute) of the proposed speeds V20-V23 (4th Determination Process) (see FIG. 12).

Next, in Step S105, the determining unit 111 respectively determines the yield rate and the actual capacity of the current conveying speed V2 and the proposed speeds V20-V23 based on the accuracy (3σ) determined in Step S103, and the processing capacity determined in Step S104 (5th Determination Process) (see FIG. 13).

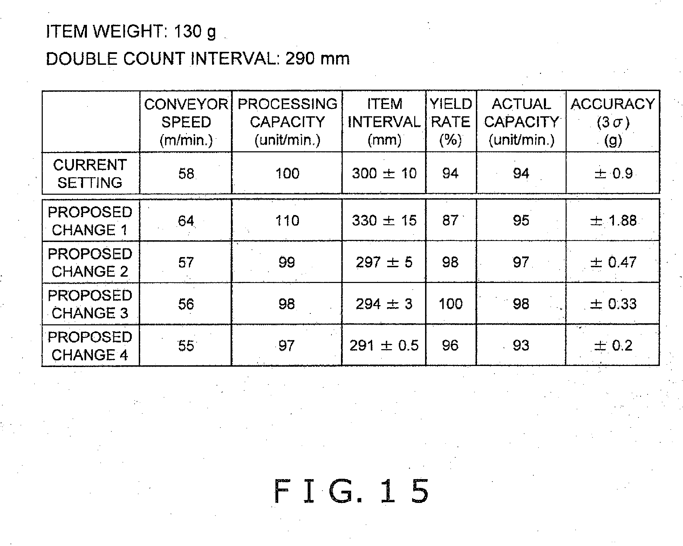

Afterwards, in Step S106, the results determined by the determining unit 111 are presented on the display unit 70. More specifically, as shown in FIG. 15, information related to a plurality of elements for the current settings and the proposed changes are presented. Values of proposed speeds V20-V23 are displayed as the proposed changes. The plurality of elements include conveyor speeds (m/min.), processing capacities (unit/min.), item intervals (mm), yield rates (%),actual capacities (unit/min.), and accuracies (3σ) (g) obtained in the processing performed by the determining unit 111.

### (Determination Result Display Screen)

FIG. 15 is a display screen showing the determination results presented on the display unit 70 as mentioned above. Displayed on the display screen are the conveyor speed (m/min.), processing capacity (unit/min.), item interval (mm), yield rate (%), actual capacity (unit/min.), and accuracy (3σ) (g) of the current setting, and the conveyor speeds, processing capacities, item intervals, yield rates, actual capacities, and accuracies for the proposed changes 1-4. The number of proposed changes 1-4 displayed here corresponds to the number of proposed speeds determined in the 2nd determination process. Also, as mentioned above, the values for proposed changes 1-4 are the values for proposed speeds V20-V23.

Among the proposed changes 1-4, proposed change 1 is for a speed higher than the current conveying speed, and proposed changes 2-4 are for speeds lower than the current conveying speed.

Proposed change 1 has values higher than the current settings for processing capacity and actual capacity. The accuracy of the current setting is higher than proposed change 1, but the actual capacity which is higher than the current setting can be obtained if the user can allow the accuracy.

Meanwhile the conveyor speed and processing capacity of the current setting are higher than proposed changes 2 and 3, the other elements (yield rate, actual capacity, and accuracy) are higher than the current settings.

The actual capacity of proposed change 4 is somewhat worse than the current setting, but the accuracy is higher than all other proposed changes 1-3. In other words, proposed change 4 can be selected if the actual capacity can ensure the user's desired capacity.

Therefore, the user can select settings to obtain the desired actual capacity and accuracy from the information presented on the display unit 70.

When the user has selected the desired proposed change on the screen presented on the display unit 70, control data S11 for changing the current conveying speed V2 is generated based on the selected setting. The control data S11 is also sent to the take-in conveyor 20, the weighing conveyor 30, and the sorting conveyor 40. In this way, the item conveying speeds of the various conveyors 20, 30, 40 can be changed to the item conveying speed provided in the data S11.

### (Characteristics)

### (1)

In the weighing apparatus 100 of this embodiment, the determining unit 111 determines whether or not the current conveying speed V2 can be changed. When it is determined that the current conveying speed V2 can be changed, the accuracy and processing capacity corresponding to the proposed speeds V20-V23 are determined. The results of the determination are then displayed on the display unit 70 as shown in FIG. 15.

When the weighing apparatus 100 is used, the user sets the speed so that the desired number of items can be weighed per predetermined unit of time. Here, the processing capacity of the weighing apparatus 100 is obtained by dividing the item conveying speed V2 by the item interval L2 [processing capacity (unit/min.) = V2/L2]. Therefore, when the item interval L2 is constant, the number of items weighed per unit of time increases as the item conveying speed V2 is increased.

Also, data S1 related to the weight of items Q obtained by the weighing unit 50 is converted to weight data S5 by the AD converter 200, and then a low-pass filter corresponding to the current conveying speed V2 is used to determine the weight. Here, when a low-pass filter having a high cut-off frequency is used, the response speed is fast but the overshoot is high. Thus, the resulting value is unstable. Also, when a low-pass filter having a low cut-off frequency is used, the response speed is slow but the overshoot is low. Thus, the resulting value is stable. A low-pass filter having a low cut-off frequency needs a longer filter time than a low-pass filter having a high cut-off frequency. Therefore, in order to use a low-pass filter having a low cut-off frequency, the item conveying speed V2 needs to be limited so as to be able to ensure a fast response.

Trying to increase the weighing accuracy by extending the filter time causes the processing capacity of the weighing apparatus 100 to decline as described above. In other words, the accuracy and processing capacity can be said to be in a trade-off relationship. However, if the user can obtain an acceptable processing capacity, the conveying speed can be reduced in order to improve accuracy.

In the weighing apparatus 100 of this embodiment, the accuracy and processing capacity for proposed speeds V20-V23 are determined based on a functional expression when it has been determined that the current conveying speed V2 can be changed. The accuracy and processing capacity for a plurality of proposed speeds V20-V23 can also be presented on the display unit 70. The user can thus select desired transfer speed which enables to obtain an adequate accuracy and processing capacity.

### (2)

In the weighing apparatus 100 of this embodiment, the yield rate and actual capacity can be determined for proposed speeds V20-V23 in addition to accuracy and processing capacity. Even if the processing capacity decreases due to the lowering of the conveying speed, if the accuracy and/or actual capacity increase, it is conceivable to lower the conveying speed and decrease the processing capacity. Therefore, the user can select the desired conveying speed after consideration of the values of the accuracy and/or actual capacity.

### < Modifications >

### (1)

In the weighing apparatus 100 in this embodiment, the results determined by the determining unit 111 (determination results) are presented on the display unit 70, so that the user can decide if the current conveying speed V2 is to be changed or not, or if the current conveying speed V2 is to be changed to one of the proposed speeds V20-V23 in a case the user decided to change the current conveying speed V2. However, it can be designed to indicate an advice regarding which proposed speeds V20-V23 is preferred to use when the determining unit 111 determines that the current conveying speed V2 can be changed.

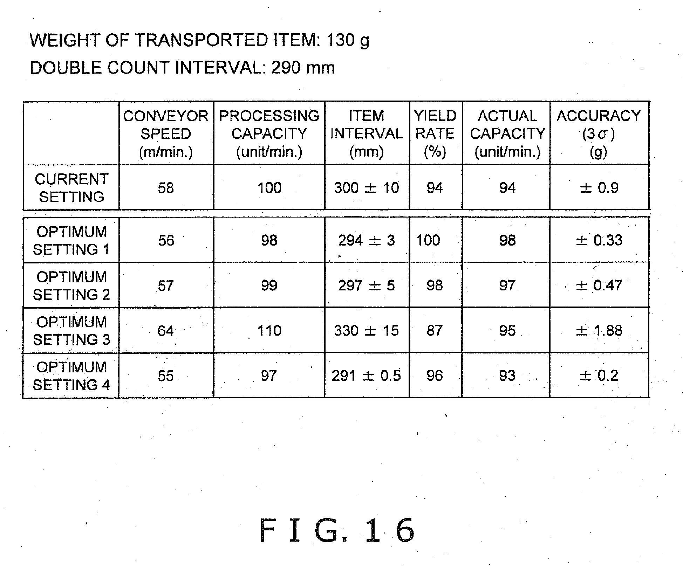

For example, priority data can also be stored in the storage unit 112. Priority data is data related to elements considered with precedence when the item conveying speed V2 is changed. Elements considered with precedence include the yield rate, actual performance, and accuracy. Here, it can be displayed the screen shown in FIG. 16 on the display unit 70 when the actual capacity has been selected as data related to elements considered with precedence. In FIG. 16, the preferred settings (optimum settings) based on priority data (here, actual capacity) are displayed in order. In this way, advice can be provided to the user in order to select the optimum settings.

### (2)

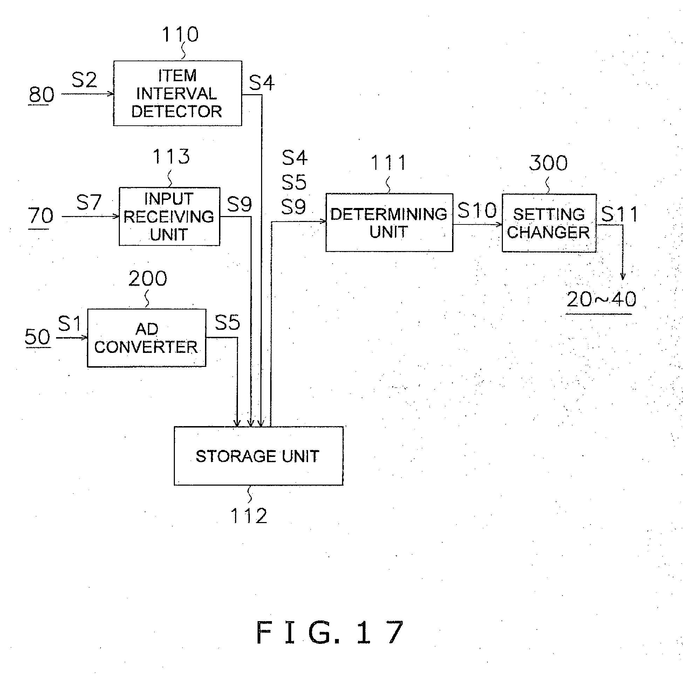

The system can also be designed to automatically change the current conveying speed V2 based on a proposed speed selected from among a plurality of proposed speeds V20-V23. For example, as shown in FIG. 17, a setting changer 300 is further disposed in the control unit 60. Also, priority data is stored in the storage unit 112 in the same manner described above.

When the determination results (data S10) are received from the determining unit 111, the setting changer 300 selects the most preferred proposed change (optimum setting) for the user based on the priority data. For example, in FIG. 15, the values of the various elements for the current conveying speed V2 (conveyor speed, processing capacity, item interval, yield rate, actual performance, and accuracy) and the values for the various elements for the proposed changes 1-4 are displayed. As mentioned above, proposed changes 1-4 correspond to proposed speeds V20-V23. Therefore, when the user has set accuracy as the highest priority, the setting changer 300 selects proposed change 4 with the highest accuracy from among proposed changes 1 to 4. When the user has set yield rate as the highest priority, the setting changer 300 selects proposed change 3. When the user has set actual capacity as the highest priority, the setting changer 300 selects proposed change 3.

The setting changer 300 sends to the take-in conveyor 20, the weighing conveyor 30, and the sorting conveyor 40 control data 11 for changing the current conveying speed V2 based on the proposed change selected in accordance with the priority data. In this way, the item conveying speed for each conveyor 20, 30, 40 can be changed to the item conveying speed provided in the data S11. In this case, the presentation of guidance on the display unit 7 can be omitted.

In the weighing apparatus 1 in this embodiment, the weighing can always be performed at the proper item conveying speed V2 because the item conveying speed V2 is automatically changed to the proper value by the setting changer 300.

### REFERENCE SIGNS LIST

- 1, 100: Weighing apparatus
- 3, 30: Weighing conveyor
- 5, 50: Weighing unit
- 6, 60: Control unit
- 7, 70: Display unit
- 8, 80: Photosensor
- 10, 110: Item interval detecting unit
- 11, 111: Determining unit
- 12, 22, 112: Storage unit
- 21: Data processing unit
- 23A, 23B: Low-pass filter
- 30, 300: Setting changer

### CITATION LIST

### PATENT LITERATURE

< Patent Document 1 > Japanese Laid-open Patent Publication No. 61-14047

## Claims

1. A weighing apparatus (1, 100) comprising:
conveying means (3, 30) configured to convey an item;
weighing means (5, 50) configured to measure a weight of the item conveyed on the conveying means;
**characterised by**
detecting means (10, 110) configured to detect an item interval related to a distance between a plurality of items supplied to the conveying means;
first storing means (12, 112) configured to store a plurality of item intervals acquired by the detecting means during a predetermined period of time in the past; and
presenting means (7, 70) configured to provide, based on the plurality of item intervals, guidance related to a change in the item conveying speed set by the conveying means.

2. The weighing apparatus (1, 100) according to claim 1, wherein
the presenting means (7, 70) is configured to provide the guidance including information related to weighing accuracy of the items.

3. The weighing apparatus (1, 100) according to claim 2, wherein
the presenting means (7, 70) is configured to provide the guidance including a first element and a second element, the first element being information related to the weighing accuracy of the item and the second element being different from the first element.

4. The weighing apparatus (1, 100) according to claim 3, further comprising:
an accuracy information storing area (12, 112) configured to store information related to the weighing accuracy of the item, the information being determined using a plurality of different filters; and
determining means (11, 111) configured to determine the weighing accuracy of the item based on information related to the weighing accuracy of the item stored in the accuracy information storing area;
wherein the presenting means (7, 70) is configured to provide the guidance including information related to the weighing accuracy of the item determined by the determining means.

5. The weighing apparatus (1, 100) according to claim 4, wherein
the determining means (11, 111) is configured to determine, based on information related to the weighing accuracy of the item stored in the accuracy information storing area, the weighing accuracy of the item corresponding to the item conveying speed.

6. The weighing apparatus (1, 100) according to any one of claims 1 to 5, wherein
the determining means is configured to determine, based on the plurality of item intervals, whether or not the item conveying speed can be changed; and
the presenting means (7, 70) is configured to provide the guidance when the determining means has determined that the item conveying speed can be changed.

7. The weighing apparatus (1, 100) according to claim 2, further comprising:
data processing means (21, 111) configured to execute a filter processing on the weight data acquired by the weighing means; and
second storing means (22, 112) configured to store a plurality of weight data sets related to a plurality of items and acquired by the weighing means during a predetermined period of time in the past;
wherein the data processing means (21, 111) is configured to execute filter processing on the plurality of weight data sets using a second filter different from the first filter currently set, and the determining means determines, based on the results of the filter processing using the second filter, whether or not the item conveying speed can be changed.

8. The weighing apparatus (1, 100) according to claim 7, wherein
the determining means (11, 111) is configured to calculate an item defect rate based on the results of the filter processing using the second filter; and to determine, based on the defect rate, whether or not the item conveying speed can be changed.

9. The weighing apparatus (1, 100) according to claim 7 or 8, wherein
the determining means (11, 111) is configured such that the determining means (11, 111) can set the item conveying speed in a proposed change to a value lower than the item conveying speed corresponding to the minimum value for a plurality of item intervals.

10. The weighing apparatus (1, 100) according to any one of claims 7 to 9, further comprising changing means (30, 300) configured to change the currently set item conveying speed to an item conveying speed obtained by the determining means.

## Patentansprüche

1. Wiegevorrichtung (1, 100) mit:
einem Beförderungsmittel (3, 30), das konfiguriert ist, einen Gegenstand zu befördern;
einem Wiegemittel (5, 50), das konfiguriert ist, ein Gewicht des auf dem Beförderungsmittel beförderten Gegenstands zu messen;
**gekennzeichnet durch**
ein Ermittlungsmittel (10, 110), das konfiguriert ist, einen Gegenstandsintervall zu ermitteln, das einen Abstand zwischen einer Vielzahl von Gegenständen betrifft, die dem Beförderungsmittel zugeführt werden;
ein erstes Speichermittel (12, 112), das konfiguriert ist, eine Vielzahl von Gegenstandsintervallen zu speichern, die durch das Ermittlungsmittel während einer vorgegebenen Zeitspanne in der Vergangenheit erfasst wurden; und
ein Präsentationsmittel (7, 70), das konfiguriert ist, beruhend auf der Vielzahl der Gegenstandsintervalle eine Anleitung bereitzustellen, die eine Änderung der Gegenstandsbeförderungsgeschwindigkeit betrifft, die **durch** das Beförderungsmittel eingestellt wird.

2. Wiegevorrichtung (1, 100) nach Anspruch 1, wobei das Präsentationsmittel (7, 70) konfiguriert ist, die Anleitung bereitzustellen, die Informationen umfasst, die eine Wiegegenauigkeit der Gegenstände betrifft.

3. Wiegevorrichtung (1, 100) nach Anspruch 2, wobei das Präsentationsmittel (7, 70) konfiguriert ist, die Anleitung bereitzustellen, die ein erstes Element und ein zweites Element aufweist, wobei das erste Element aus Informationen besteht, die die Wiegegenauigkeit des Gegenstands betreffen, und sich das zweite Element vom ersten Element unterscheidet.

4. Wiegevorrichtung (1, 100) nach Anspruch 3, die ferner aufweist:
einen Genauigkeitsinformationsspeicherbereich (12, 112), der konfiguriert ist, Informationen zu speichern, die die Wiegegenauigkeit des Gegenstands betreffen, wobei die Informationen mittels einer Vielzahl unterschiedlicher Filter festgestellt werden; und
ein Feststellungsmittel (11, 111), das konfiguriert ist, die Wiegegenauigkeit des Gegenstands beruhend auf Informationen festzustellen, die die Wiegegenauigkeit des Gegenstands betreffen, die im
Genauigkeitsinformationsspeicherbereich gespeichert sind; wobei das Präsentationsmittel (7, 70) konfiguriert ist, die Anleitung bereitzustellen, die Informationen umfasst, die die Wiegegenauigkeit des Gegenstands betreffen, die durch das Feststellungsmittel festgestellt wird.

5. Wiegevorrichtung (1, 100) nach Anspruch 4, wobei das Feststellungsmittel (11, 111) konfiguriert ist, beruhend auf Informationen, die die Wiegegenauigkeit des Gegenstands betreffen, die im Genauigkeitsinformationsspeicherbereich gespeichert sind, die Wiegegenauigkeit des Gegenstands festzustellen, die der Gegenstandsbeförderungsgeschwindigkeit entspricht.

6. Wiegevorrichtung (1, 100) nach einem der Ansprüche 1 bis 5, wobei das Feststellungsmittel konfiguriert ist, beruhend auf der Vielzahl der Gegenstandsintervalle festzustellen, ob die Gegenstandsbeförderungsgeschwindigkeit geändert werden kann oder nicht; und
das Präsentationsmittel (7, 70) konfiguriert ist, die Anleitung bereitzustellen, wenn das Feststellungsmittel festgestellt hat, dass die Gegenstandsbeförderungsgeschwindigkeit geändert werden kann.

7. Wiegevorrichtung (1, 100) nach Anspruch 2, die ferner aufweist:
ein Datenverarbeitungsmittel (21, 111), das konfiguriert ist, eine Filterverarbeitung an den Gewichtsdaten auszuführen, die durch das Wiegemittel erfasst werden; und
ein zweites Speichermittel (22, 112), das konfiguriert ist, eine Vielzahl von Gewichtsdatensätzen zu speichern, die eine Vielzahl von Gegenständen betreffen, die durch das Wiegemittel während einer vorgegebenen Zeitspanne in der Vergangenheit erfasst wurden;
wobei das Datenverarbeitungsmittel (21, 111) konfiguriert ist, eine Filterverarbeitung an der Vielzahl der Gewichtsdatensätze mittels eines zweiten Filters auszuführen, der sich vom gegenwärtig eingestellten ersten Filter unterscheidet, und das Feststellungsmittel beruhend auf den Resultaten der Filterverarbeitung mittels des zweiten Filters feststellt, ob die Gegenstandsbeförderungsgeschwindigkeit geändert werden kann oder nicht.

8. Wiegevorrichtung (1, 100) nach Anspruch 7, wobei das Feststellungsmittel (11, 111) konfiguriert ist, eine Gegenstandsfehlerhäufigkeit beruhend auf den Resultaten der Filterverarbeitung mittels des zweiten Filters zu berechnen; und beruhend auf der Fehlerhäufigkeit festzustellen, ob die Gegenstandsbeförderungsgeschwindigkeit geändert werden kann oder nicht.

9. Wiegevorrichtung (1, 100) nach Anspruch 7 oder 8, wobei das Feststellungsmittel (11, 111) so konfiguriert ist, dass das Feststellungsmittel (11, 111) bei einer vorgeschlagenen Änderung die Gegenstandsbeförderungsgeschwindigkeit auf einen Wert einstellen kann, der niedriger als die Gegenstandsbeförderungsgeschwindigkeit ist, die dem Minimalwert für eine Vielzahl von Gegenstandsintervallen entspricht.

10. Wiegevorrichtung (1, 100) nach einem der Ansprüche 7 bis 9, die ferner ein Änderungsmittel (30, 300) aufweist, das konfiguriert ist, die gegenwärtig eingestellte Gegenstandsbeförderungsgeschwindigkeit auf eine Gegenstandsbeförderungsgeschwindigkeit einzustellen, die durch das Feststellungsmittel erhalten wird.

## Revendications

1. Dispositif de pesage (1, 100) comprenant :
un moyen de transport (3, 30) prévu pour transporter un article ;
un moyen de pesage (5, 50) prévu pour mesurer le poids de l'article transporté sur le moyen de transport ;
**caractérisé par**
un moyen de détection (10, 110) prévu pour détecter un espacement entre articles correspondant à une distance entre une pluralité d'articles amenés au moyen de transport ;
un premier moyen de mémorisation (12, 112) prévu pour sauvegarder une pluralité d'espacements entre articles détectés par le moyen de détection pendant une durée écoulée prédéfinie ; et
un moyen d'affichage (7, 70) prévu pour afficher une indication relative à une variation de la vitesse de transport d'article réglée par le moyen de transport, sur la base de la pluralité d'espacements entre articles.

2. Dispositif de pesage (1, 100) selon la revendication 1, où le moyen d'affichage (7, 70) est prévu pour afficher l'indication comprenant une information relative à la précision de pesage des articles.

3. Dispositif de pesage (1, 100) selon la revendication 2, où le moyen d'affichage (7, 70) est prévu pour afficher l'indication comprenant un premier élément et un deuxième élément, le premier élément étant une information relative à la précision de pesage de l'article et le deuxième élément étant différent du premier élément.

4. Dispositif de pesage (1, 100) selon la revendication 3, comprenant en outre :
une zone de mémorisation (12, 112) d'information de précision prévue pour sauvegarder une information relative à la précision de pesage de l'article, l'information étant déterminée au moyen d'une pluralité de filtres différents ;
et
un moyen de détermination (11, 111) prévu pour déterminer la précision de pesage de l'article sur la base d'une information relative à la précision de pesage de l'article sauvegardée dans la zone de mémorisation d'information de précision ;
le moyen d'affichage (7, 70) étant prévu pour afficher l'indication comprenant une information relative à la précision de pesage de l'article déterminée par le moyen de détermination.

5. Dispositif de pesage (1, 100) selon la revendication 4, où le moyen de détermination (11, 111) est prévu pour déterminer, sur la base d'une information relative à la précision de pesage de l'article sauvegardée dans la zone de mémorisation d'information de précision, la précision de pesage de l'article correspondant à la vitesse de transport d'article.

6. Dispositif de pesage (1, 100) selon l'une des revendications 1 à 5, où le moyen de détermination est prévu pour déterminer, sur la base de la pluralité d'espacements entre articles, si la vitesse de transport d'article peut être modifiée ou non ; et où le moyen d'affichage (7, 70) est prévu pour afficher l'indication quand le moyen de détermination a déterminé que la vitesse de transport d'article peut être modifiée.

7. Dispositif de pesage (1, 100) selon la revendication 2, comprenant en outre :
un moyen de traitement de données (21, 111) prévu pour exécuter un traitement de filtration des données de poids obtenues par le moyen de pesage ; et
un deuxième moyen de mémorisation (22, 112) prévu pour sauvegarder une pluralité d'ensembles de données de poids relatifs à une pluralité d'articles et obtenus par le moyen de pesage pendant une durée écoulée prédéfinie ;
le moyen de traitement de données (21, 111) étant prévu pour exécuter un traitement de filtration de la pluralité d'ensembles de données de poids au moyen d'un deuxième filtre différent du premier filtre actuellement réglé, et le moyen de détermination déterminant, sur la base des résultats du traitement de filtration au moyen du deuxième filtre, si la vitesse de transport d'article peut être modifiée ou non.

8. Dispositif de pesage (1, 100) selon la revendication 7, où le moyen de détermination (11, 111) est prévu pour calculer un taux d'articles défectueux sur la base des résultats du traitement de filtration au moyen du deuxième filtre ; et pour déterminer, sur la base du taux d'articles défectueux, si la vitesse de transport d'article peut être modifiée ou non.

9. Dispositif de pesage (1, 100) selon la revendication 7 ou la revendication 8, où
le moyen de détermination (11, 111) est prévu de telle manière que le moyen de détermination (11, 111) peut régler la vitesse de transport d'article suivant une variation proposée à une valeur inférieure à la vitesse de transport d'article correspondant à la valeur minimale pour une pluralité d'espacements entre articles.

10. Dispositif de pesage (1, 100) selon l'une des revendications 7 à 9, comprenant en outre un moyen de variation (30, 300) prévu pour varier la vitesse de transport d'article actuellement réglée vers une vitesse de transport d'article obtenue par le moyen de détermination.
